# FASCICULE DE BREVET EUROPEEN

(11) **EP 2 593 268 B1**
(45) Date de publication et mention de la délivrance du brevet: **02.09.2015**
(21) Numéro de dépôt: 11723567.1
(22) Date de dépôt: 05.05.2011
(51) Int. Cl.: B23K 26/14, B23K 26/32, B23K 28/02, B23K 35/02, B23K 35/30, B23K 26/20, B23K 35/38

(54) **PROCEDE DE SOUDAGE HYBRIDE ARC/LASER DE PIECES EN ACIER ALUMINISE AVEC FIL A ELEMENTS GAMAGENES ET GAZ CONTENANT MOINS DE 10% D'AZOTE OU D'OXYGENE**
HYBRIDES LICHTBOGENSCHWEISS-/LASERSCHWEISSVERFAHREN FÜR ALUMINIUMBESCHICHTETES STAHLTEIL UNTER VERWENDUNG VON GAMMAGENEN ELEMENTEN UND GAS MIT WENIGER ALS 10 % STICKSTOFF ODER SAUERSTOFF
HYBRID ARC/LASER-WELDING METHOD FOR ALUMINIZED STEEL PARTS USING GAMMAGENIC ELEMENTS AND A GAS CONTAINING LESS THAN 10 % OF NITROGEN OR OXYGEN

(30) Priorité: 13.07.2010 FR 1055690
(43) Date de publication de la demande: 22.05.2013
(73) Titulaire: L'Air Liquide Société Anonyme pour l'Etude et l'Exploitation des Procédés Georges Claude, 75007 Paris (FR)
(72) Inventeur: BRIAND, Francis, F-75009 Paris (FR); DUBET, Olivier, F-78210 Saint Cyr l'école (FR)
(74) Mandataire: Pittis, Olivier
(86) Numéro de dépôt international: PCT/FR2011/051016
(87) Numéro de publication internationale: WO 2012/007664

(56) Documents cités:
- EP-A1- 1 878 531
- EP-A2- 1 380 380
- JP-A- 2003 220 481
- KR-A- 20010 057 596
- US-A1- 2008 057 341

## Description

L'invention porte sur un procédé de soudage de soudage hybride laser/arc de pièces en acier comprenant un revêtement surfacique à base d'aluminium, en particulier un revêtement d'aluminium et de silicium, mettant en oeuvre un fil contenant un ou plusieurs éléments gamagènes et de préférence un gaz de protection formé d'argon et/ou d'hélium additionné de faibles proportions d'azote ou d'oxygène.

Certains aciers dit aluminisés car revêtus d'aluminium ou d'un alliage à base d'aluminium, tel les aciers de type USIBOR™, présentent des caractéristiques mécaniques très élevées après emboutissage à chaud et sont, de ce fait, de plus en plus utilisés dans le domaine de la construction de véhicules automobiles, lorsqu'un gain de poids est recherché.

En effet, ces aciers sont conçus pour être traités thermiquement puis trempés pendant l'opération d'emboutissage à chaud et les caractéristiques mécaniques qui en découlent permettent un allégement très significatif du poids du véhicule par rapport à un acier à haute limite d'élasticité standard. Ils sont principalement utilisés pour fabriquer des poutres de pare-chocs, des renforts de porte, des pieds milieu, des montants de baie...

Le document EP-A-1878531, base du préambule de la revendication 1, propose de souder ce type d'aciers aluminisés par mise en oeuvre d'un procédé de soudage hybride laser/arc. Le principe du soudage hybride laser/arc est bien connu dans l'état de la technique.

Toutefois, il a été observé en pratique qu'après une opération de soudage hybride avec atmosphère protectrice formée d'un mélange He/Ar, de pièces en acier revêtues d'aluminium ou d'un alliage d'aluminium, notamment alliage de type Al/Si, et traitement thermique post-soudage comprenant un emboutissage à chaud à 920°C puis une trempe dans l'outil (30°/s), une phase moins résistante en traction que le métal de base et que la zone fondue apparaissait souvent dans l'assemblage soudé.

Or, cette phase moins résistante en traction constitue une zone fragile de la soudure ainsi obtenue, comme expliqué ci-après. Ces zones plus fragiles apparaissent au sein de la zone de martensite sous forme d'îlots de phase blanche contenant des agrégats d'aluminium provenant de la couche surfacique.

Après analyse, il a été déterminé que cette phase contient un pourcentage non négligeable d'aluminium (> 2%) qui provoque la non-transformation austénitique de l'acier lors de son traitement thermique avant emboutissage, c'est-à-dire que cette phase reste sous forme de ferrite Delta et il en résulte une dureté moindre que le reste de la pièce ayant subit une transformation martensitique/bainitique.

Or, la phase non transformée en phase martensite peut entraîner, lors d'une caractérisation mécanique de l'assemblage après soudage, emboutissage suivi d'un traitement thermique, des fissures, voire une rupture par cisaillement de l'assemblage soudé, car ces zones ayant incorporé de l'aluminium, présentent une résistance de la soudure plus faible que celle du métal déposé.

Le problème qui se pose est dès lors de proposer un procédé de soudage hybride arc/laser améliorant les propriétés mécaniques du joint soudé, lors d'une opération de soudage de pièces d'acier revêtues d'une couche comprenant de l'aluminium. Plus précisément, le problème est de pouvoir obtenir une microstructure homogène de type martensite en zone fondue, c'est-à-dire dans le joint de soudure, après emboutissage à chaud, typiquement à environ 920°C, et trempe dans l'outil d'emboutissage, typiquement avec une vitesse de refroidissement entre 800 et 500°C de l'ordre de 30°C/sec.

La solution de l'invention est alors un procédé de soudage hybride laser/arc mettant en oeuvre un arc électrique et un faisceau laser se combinant l'un à l'autre au sein d'un bain de soudage unique, dans lequel du métal fondu est apporté par fusion d'un fil fusible, le bain de soudage étant réalisé sur au moins une pièce d'acier comprenant un revêtement surfacique à base d'aluminium, et mettant en oeuvre un gaz de protection, caractérisé en ce que le fil fusible contient au moins 3 % en poids et au plus 20% en poids d'un ou plusieurs éléments gamagènes et le gaz de protection est formé d'hélium et/ou d'argon additionné d'au moins 2% en volume à moins de 10% en volume d'azote ou d'oxygène en tant que composé(s) additionnel(s).

Selon le cas, le procédé de l'invention peut comprendre l'une ou plusieurs des caractéristiques suivantes :
- les éléments gamagènes sont choisis parmi le carbone (C), le manganèse (Mn), le nickel (Ni) et l'azote (N).
- le fil fusible contient au moins du Mn.
- les éléments gammagènes peuvent être amenés sous forme métal ou d'alliage, par exemple un ferro-alliage carburé ou graphite pour le carbone, du manganèse électrolytique ou un ferro-alliage pour le manganèse, du nickel élémentaire, du ferro-chrome nitruré pour l'azote, en particulier pour un fil fourré de type *metal cored,* c'est-à-dire à âme métallique.
- le fil fusible contient plusieurs éléments gamagènes choisis parmi C, Mn, Ni et N.
- le fil fusible contient au moins 5 % en poids d'un ou plusieurs éléments gamagènes.
- le fil fusible contient en outre du fer.
- le fil est un fil fourré, en particulier un fil fourré de type *metal cored,* c'est-à-dire à âme métallique, ou un fil plein.
- le gaz de protection contient un mélange d'hélium et d'argon.
- le gaz de protection est formé d'hélium et/ou d'argon additionné de moins de 9% en volume d'azote ou d'oxygène, de préférence d'azote car la présence d'azote dans le gaz permet d'apporter, en particulier, un complément en éléments gamagènes.
- le gaz de protection contient au moins 4% en volume d'azote en tant que composé additionnel.
- le gaz de protection contient au moins 5% en volume d'azote en tant que composé additionnel.
- le gaz de protection contient au plus 8% en volume d'azote en tant que composé additionnel.
- le gaz de protection contient au moins 5,5% en volume d'azote et au plus 7,5% en volume d'azote.
- la teneur en azote dans le gaz de protection mis en oeuvre est de l'ordre de 6 à 7% d'azote dans l'argon ou dans un mélange argon/hélium.
- la teneur en oxygène est inférieure à 8% en volume dans l'argon ou dans l'argon/hélium.
- la teneur en oxygène est de l'ordre de 3 à 5% d'oxygène dans l'argon ou dans l'argon/hélium.
- le gaz de protection est formé d'hélium et/ou d'argon additionné de 4 à 8% en volume d'azote.
- la ou les pièces d'acier comprennent un revêtement surfacique à base d'aluminium ayant une épaisseur comprise entre 5 et 100 µm, de préférence inférieure ou égale à 50 µm.
- la ou les pièces métalliques sont en acier avec un revêtement surfacique à base d'aluminium et de silicium, de préférence le revêtement surfacique contient plus de 70% en masse d'aluminium.
- la ou les pièces métalliques sont en acier au carbone.
- le fil fusible étant fondu par l'arc électrique, de préférence un arc obtenu au moyen d'une torche de soudage MIG.
- le générateur laser générant le faisceau laser est de type CO₂, à fibre ou à disque.
- la ou les pièces à souder sont choisies parmi les flancs raboutés et les tubes.
- plusieurs pièces sont soudées entre elles, en particulier deux pièces.
- les pièces sont positionnées et soudées bout à bout jointifs.
- la ou les pièces à souder ont une épaisseur de 0.2 mm à 3 mm. On considère l'épaisseur au niveau du plan de joint à réaliser, c'est-à-dire à l'endroit où le métal est fondu pour former le joint de soudage, par exemple au niveau du bord d'extrémité de la ou des pièces à souder.
- le revêtement recouvre au moins une surface de la ou des pièces, mais de préférence pas ou quasiment pas de revêtement à base d'aluminium n'est présent sur les rebords d'extrémités de la ou desdites pièces, c'est-à-dire sur les tranches d'une tôle par exemple.
- la ou les pièces métalliques comprennent un revêtement surfacique à base d'aluminium et de silicium contenant une proportion d'aluminium entre 5 et 100 fois supérieure à celle de silicium, par exemple une proportion d'aluminium de 90% en poids et une proportion de silicium de 10% en poids, soit une couche de revêtement surfacique comprenant 9 fois plus d'aluminium que de silicium.
- la ou les pièces métalliques comprennent un revêtement surfacique à base d'aluminium et de silicium contenant une proportion d'aluminium entre 5 et 50 fois supérieure à celle de silicium, notamment une proportion d'aluminium entre 5 et 30 fois supérieure à celle de silicium, en particulier une proportion d'aluminium entre 5 et 20 fois supérieure à celle de silicium.
- l'on soude plusieurs pièces l'une avec l'autre, typiquement deux pièces ; lesdites pièces pouvant être identiques ou différentes, notamment en termes de formes, d'épaisseurs etc...
- les pièces sont en acier fortement allié (>5% en poids d'éléments d'alliage), faiblement allié (<5% en poids d'éléments d'alliage) ou non alliés, par exemple un acier au carbone.
- le fil de soudage est un fil plein ou un fil fourré ayant un diamètre entre 0,5 et 5 mm, typiquement entre environ 0,8 et 2,5 mm.
- le faisceau laser précède l'arc MIG durant le soudage, en considérant le sens du soudage.
- le régime de soudage MIG est de type arc court.
- la tension de soudage est inférieure à 20 V, typiquement comprise entre 11 et 16 V.
- l'intensité de soudage est inférieure à 200 A, typiquement comprise entre 118 et 166 A.
- la vitesse de soudage est inférieure à 20 m/min, typiquement comprise entre 4 et 6 m/min.
- la pression du gaz est comprise entre 2 et 15 bar, par exemple de l'ordre de 4 bar.
- le débit du gaz est compris entre 5 et 40 l/min, typiquement de l'ordre de 25 l/min.
- le point de focalisation du faisceau laser est focalisé au dessus de la pièce à souder, de préférence à une distance comprise entre 3 à 6 mm.
- la distance entre le fil d'apport et le faisceau laser doit être comprise entre 2 et 3 mm environ.

L'invention va maintenant être mieux comprise grâce aux Exemples suivant visant à démontrer l'efficacité du procédé de soudage hybride laser/arc selon l'invention.

Pour ce faire, des essais de soudage hybride laser/arc ont été réalisés au moyen d'une source laser de type CO₂ et d'une torche de soudage à l'arc MIG de pièces en acier revêtu d'une couche d'environ 30 µm d'un alliage aluminium/silicium en proportions respectives de 90% et de 10% en poids. Plus précisément, dans les Exemples 1 à 3 ci-après, les pièces à souder sont des flancs raboutés disposés bout à bout jointif en acier aluminisé (Al/Si) de type Usibor 1500™.

Dans les exemples 1 à 3, le gaz de protection mis en oeuvre est distribué à un débit de 25 l/min et à une pression de 4 bar, et la vitesse de soudage est de 4 m/min. La tension de soudage de 15 V environ et l'intensité d'environ 139 A qui sont obtenues grâce à un générateur de type Digi@wave 500 (Arc court/Arc court +) en mode synergique (EN 131) commercialisé par Air Liquide Welding France.

### Exemple 1

Les pièces soudées ont, dans cet Exemple, une épaisseur de 1.7 mm.

Le gaz employé est un mélange ARCAL 37 (composition : 70% en volume He + 30% en volume Ar) additionné de 3% en volume de O₂ ; le mélange gazeux ARCAL 37 est disponible auprès de L'Air Liquide.

La torche utilisée est une torche MIG commercialisée par la société OTC et alimentée par un fil d'apport de 1.2 mm de diamètre contenant, outre du fer, environ 20% en poids de manganèse (Mn), qui est délivré à une cadence de 3 m/min.

La source laser est un oscillateur laser de type CO₂ et la puissance mise en oeuvre est de 8 kW.

Les résultats obtenus montrent que, si les cordons de soudure sont homogènes en microstructure, alors la présence de manganèse en forte proportion (i.e. environ 20 % en poids Mn) en zone fondue conduit à de bien meilleurs résultats que les essais avec peu de manganèse dans le cordon de soudure (i.e. environ 2% Mn).

Après un traitement thermique de trempe (vitesse de refroidissement entre 800°C et 500°C de l'ordre de 30°C/sec), la résistance à la rupture de l'assemblage est équivalente à celle du métal de base après traitement thermique de trempe, alors que l'on ne dépasse pas 1000 MPa de résistance à la rupture (Rm) avec un fil ne contenant que 2% de manganèse.

Cet Exemple 1 met en évidence l'influence bénéfique de la présence d'éléments gamagènes, i.e. ici 20% de Mn, dans le fil sur l'obtention de cordons de soudure présentant une microstructure homogène de type martensite en zone fondue, après trempe.

### Exemple 2

Dans cet Exemple, les pièces soudées ont une épaisseur de 2.3 mm et le gaz employé est un mélange formé d'ARCAL 37 additionné de 3% en volume de O₂.

La torche utilisée est une torche MIG de référence OTC alimentée par un fil d'apport de 1.2 mm de diamètre de type Nic 535 (fil plein) comprenant du fer et, en tant qu'éléments gamagènes, 0.7% de carbone (C) et 2% de manganèse (Mn), qui est délivré à une cadence de 3 m/min.

La source laser est un oscillateur laser de type CO₂ de puissance de 12 kW

Les résultats obtenus montrent que la quantité d'éléments gamagènes, i.e. Mn et C du fil, est suffisante pour contrer l'effet de suppression de transformation austénitique causé par la présence d'aluminium en zone fondue. En effet, les micrographies montrent que les phases blanches ont entièrement disparues ou sont fortement réduites.

En outre, il a été observé que la résistance à la rupture de l'assemblage, après austénitisation et trempe, est équivalente à celle du métal de base.

Cet Exemple 2 démontre également l'influence bénéfique de la présence d'éléments gamagènes, i.e. ici C et Mn, dans le fil sur l'obtention de cordons de soudure présentant une microstructure homogène de type martensite en zone fondue, après trempe.

### Exemple 3

Cet Exemple 3 est analogue à l'Exemple 2 précédent mis à part que le procédé de soudage hybride laser/arc selon l'invention est mis en oeuvre pour souder des pièces de 2.3 mm d'épaisseur, en utilisant en tant que gaz de protection, le mélange ARCAL 37, qui est formé de 70% d'hélium et 30% d'argon, additionné de 6% de N₂.

La torche, le fil d'apport et les autres conditions de soudage sont identiques à celles de l'Exemple 2.

A titre comparatif, est également testé le mélange ARCAL 37 seul, c'est-à-dire sans addition de N₂.

Les résultats obtenus montrent que l'utilisation en combinaison d'un fil contenant des éléments gamagènes et d'un gaz de protection formé par addition de 6% de N₂ dans un mélange à 30% d'argon et 70% d'hélium (i.e. ARCAL 37) conduit à de meilleurs résultats que lorsque le gaz de protection ne contient pas d'azote alors que le fil est le même.

En effet, en présence d'azote dans le mélange, on assiste à une amélioration notable des résultats, qui augmente proportionnellement à la teneur en N₂ dans le mélange. Ainsi, les micrographies montrent que les phases blanches ont entièrement disparues et par ailleurs, la résistance à la rupture de l'assemblage, après austénitisation et trempe, est équivalente à celle du métal de base.

L'amélioration est d'autant plus notable que la teneur en azote augmente mais avec un optimum inférieur à 10% en volume, ce qui inciterait à utiliser de l'ordre de 6 à 7% d'azote dans de l'argon ou dans un mélange argon/hélium.

D'une façon générale, les résultats obtenus lors des essais (Ex. 1 à 3) montrent clairement que la présence d'éléments gamagènes dans le fil fusible permet d'améliorer notablement la qualité du soudage des aciers revêtus d'une couche surfacique d'alliage aluminium/silicium, en particulier d'obtenir une microstructure homogène de type martensite en zone fondue.

A noter que l'amélioration est d'autant plus remarquable que :
- soit la teneur en azote dans le gaz de protection mis en oeuvre simultanément augmente mais avec un optimum inférieur à 10% en volume, ce qui inciterait à utiliser de l'ordre de 6 à 7% d'azote dans l'argon ou dans l'argon/hélium.
- soit la teneur en oxygène augmente mais avec un optimum inférieur à 10% en volume, ce qui inciterait à utiliser de l'ordre de 3 à 5% d'oxygène dans l'argon ou dans l'argon/hélium.

Le procédé de l'invention est particulièrement adapté au soudage de flancs raboutés (*tailored blanks*) utilisés dans le domaine de la construction automobile ou au soudage de tubes.

## Revendications

1. Procédé de soudage hybride laser/arc mettant en oeuvre un arc électrique et un faisceau laser se combinant l'un à l'autre au sein d'un bain de soudage unique, dans lequel du métal fondu est apporté par fusion d'un fil fusible, le bain de soudage étant réalisé sur au moins une pièce d'acier comprenant un revêtement surfacique à base d'aluminium, et mettant en oeuvre un gaz de protection, **caractérisé en ce que** le fil fusible contient au moins 3 % en poids et au plus 20% en poids d'un ou plusieurs éléments gamagènes et le gaz de protection est formé d'hélium et/ou d'argon additionné d'au moins 2% en volume à moins de 10% en volume d'azote ou d'oxygène.

2. Procédé selon la revendication 1, **caractérisé en ce que** les éléments gamagènes sont choisis parmi C, Mn, Ni et N.

3. Procédé selon l'une des revendications précédentes, **caractérisé en ce que** le gaz de protection est formé d'hélium et/ou d'argon additionné de moins de 10% en volume d'azote.

4. Procédé selon l'une des revendications précédentes, **caractérisé en ce que** la ou les pièces d'acier comprennent un revêtement surfacique à base d'aluminium ayant une épaisseur comprise entre 5 et 100 µm.

5. Procédé selon l'une des revendications précédentes, **caractérisé en ce que** la ou les pièces d'acier comprennent un revêtement surfacique à base d'aluminium ayant une épaisseur inférieure ou égale à 50 µm.

6. Procédé selon l'une des revendications précédentes, **caractérisé en ce que** la ou les pièces métalliques sont en acier avec un revêtement surfacique à base d'aluminium et de silicium (Al/Si).

7. Procédé selon l'une des revendications précédentes, **caractérisé en ce que** la ou les pièces métalliques sont en acier avec un revêtement surfacique à base d'aluminium et de silicium, le revêtement surfacique contenant plus de 70% en masse d'aluminium.

8. Procédé selon l'une des revendications précédentes, caractérisé en que le fil fusible est fondu par l'arc électrique, de préférence un arc obtenu au moyen d'une torche de soudage MIG.

9. Procédé selon l'une des revendications précédentes, **caractérisé en ce que** le générateur laser générant le faisceau laser est de type CO₂, à fibre ou à disque.

10. Procédé selon l'une des revendications précédentes, **caractérisé en ce que** la ou les pièces à souder sont choisies parmi les flancs raboutés, et les tubes, ou pots d'échappements.

11. Procédé selon l'une des revendications précédentes, **caractérisé en ce que** le fil fusible contient plusieurs éléments gamagènes choisis parmi C, Mn, Ni et N.

12. Procédé selon l'une des revendications précédentes, **caractérisé en ce que** le fil fusible contient au moins 5 % en poids d'un ou plusieurs éléments gamagènes.

13. Procédé selon l'une des revendications précédentes, **caractérisé en ce que** le fil fusible contient au moins du Mn.

14. Procédé selon l'une des revendications précédentes, **caractérisé en ce que** le fil fusible contient en outre du fer.

## Patentansprüche

1. Verfahren zum Laserstrahl-Lichtbogen-Hybridschweißen unter Verwendung eines Lichtbogens und eines Laserstrahls, die in einem einzigen Schweißbad miteinander kombiniert werden, bei dem geschmolzenes Metall durch Abschmelzen eines Schmelzdrahtes zugeführt wird, wobei das Schweißbad auf wenigstens einem Teil aus Stahl realisiert wird, das eine Oberflächenbeschichtung auf Aluminiumbasis aufweist, und unter Verwendung eines Schutzgases, **dadurch gekennzeichnet, dass** der Schmelzdraht wenigstens 3 Gew.-% und höchstens 20 Gew.-% eines oder mehrerer gammagener Elemente enthält und das Schutzgas von Helium und/oder Argon gebildet ist, dem wenigstens 2 Volumen-% bis weniger als 10 Volumen-% Stickstoff oder Sauerstoff zugesetzt werden.

2. Verfahren nach Anspruch 1, **dadurch gekennzeichnet, dass** die gammagenen Elemente aus C, Mn, Mi und N ausgewählt sind.

3. Verfahren nach einem der vorhergehenden Ansprüche, **dadurch gekennzeichnet, dass** das Schutzgas von Helium und/oder Argon gebildet ist, dem wenigstens 10 Volumen-% Stickstoff zugesetzt werden.

4. Verfahren nach einem der vorhergehenden Ansprüche, **dadurch gekennzeichnet, dass** das oder die Teile aus Stahl eine Oberflächenbeschichtung auf Aluminiumbasis mit einer Dicke zwischen 5 und 100 µm aufweisen.

5. Verfahren nach einem der vorhergehenden Ansprüche, **dadurch gekennzeichnet, dass** das oder die Teile aus Stahl eine Oberflächenbeschichtung auf Aluminiumbasis mit einer Dicke von kleiner oder gleich 50 µm aufweisen.

6. Verfahren nach einem der vorhergehenden Ansprüche, **dadurch gekennzeichnet, dass** das oder die Metallteile aus Stahl sind mit einer Oberflächenbeschichtung auf Aluminium- und Siliziumbasis (Al/Si).

7. Verfahren nach einem der vorhergehenden Ansprüche, **dadurch gekennzeichnet, dass** das oder die Metallteile aus Stahl sind mit einer Oberflächenbeschichtung auf Aluminium- und Siliziumbasis, wobei die Oberflächenbeschichtung mehr als 70 Massen-% Aluminium enthält.

8. Verfahren nach einem der vorhergehenden Ansprüche, **dadurch gekennzeichnet, dass** der Schmelzdraht durch den Lichtbogen abgeschmolzen wird, vorzugsweise durch einen Lichtbogen, der mittels eines MIG-Schweißbrenners erhalten wird.

9. Verfahren nach einem der vorhergehenden Ansprüche, **dadurch gekennzeichnet, dass** der den Laserstrahl erzeugende Lasergenerator vom CO₂-, Faser- oder Scheibentyp ist.

10. Verfahren nach einem der vorhergehenden Ansprüche, **dadurch gekennzeichnet, dass** das oder die zu schweißenden Teile aus den angesetzten Flanken und den Rohren oder Auspufftöpfen ausgewählt sind.

11. Verfahren nach einem der vorhergehenden Ansprüche, **dadurch gekennzeichnet, dass** der Schmelzdraht mehrere gammagene Elemente enthält, die aus C, Mn, Ni und N ausgewählt sind.

12. Verfahren nach einem der vorhergehenden Ansprüche, **dadurch gekennzeichnet, dass** der Schmelzdraht wenigstens 5 Gew.-% eines oder mehrerer gammagener Elemente enthält.

13. Verfahren nach einem der vorhergehenden Ansprüche, **dadurch gekennzeichnet, dass** der Schmelzdraht wenigstens Mn enthält.

14. Verfahren nach einem der vorhergehenden Ansprüche, **dadurch gekennzeichnet, dass** der Schmelzdraht ferner Eisen enthält.

## Claims

1. Laser/arc hybrid welding method using an electric arc and a laser beam in combination in a single weld pool, in which weld metal is provided by melting a consumable wire, the weld pool being produced in at least one steel workpiece comprising an aluminium-based surface coating, and using a shielding gas, **characterised in that** the consumable wire contains at least 3 wt.% and at most 20 wt.% of one or more gammagenic elements and the shielding gas is formed of helium and/or argon supplemented by at least 2 vol.% to at least 10 vol.% of nitrogen or oxygen.

2. Method according to claim 1, **characterised in that** the gammagenic elements are selected from C, Mn, Ni and N.

3. Method according to either of the preceding claims, **characterised in that** the shielding gas is formed of helium and/or argon supplemented by less than 10 vol.% of nitrogen.

4. Method according to any of the preceding claims, **characterised in that** the steel workpiece(s) comprise(s) an aluminium-based surface coating having a thickness of between 5 and 100 µm.

5. Method according to any of the preceding claims, **characterised in that** the steel workpiece(s) comprise(s) an aluminium-based surface coating having a thickness of 50 µm or less.

6. Method according to any of the preceding claims, **characterised in that** the metal workpiece(s) is/are made of steel having a surface coating based on aluminium and silicon (Al/Si).

7. Method according to any of the preceding claims, **characterised in that** the metal workpiece(s) is/are made of steel having a surface coating based on aluminium and silicon, the surface coating containing more than 70 wt.% aluminium.

8. Method according to any of the preceding claims, **characterised in that** the consumable wire is melted by the electric arc, preferably an arc obtained by means of a MIG welding torch.

9. Method according to any of the preceding claims, **characterised in that** the laser generator generating the laser beam is of the CO₂, fibre, or disc type.

10. Method according to any of the preceding claims, **characterised in that** the workpiece(s) to be welded is/are selected from joined panels and tubes or exhaust pipes.

11. Method according to any of the preceding claims, **characterised in that** the consumable wire contains a plurality of gammagenic elements selected from C, Mn, Ni and N.

12. Method according to any of the preceding claims, **characterised in that** the consumable wire contains at least 5 wt.% of one or more gammagenic elements.

13. Method according to any of the preceding claims, **characterised in that** the consumable wire contains at least Mn.

14. Method according to any of the preceding claims, **characterised in that** the consumable wire further contains iron.
